# FASCICULE DE BREVET EUROPEEN

(11) **EP 2 512 864 B1**
(45) Date de publication et mention de la délivrance du brevet: **26.03.2014**
(21) Numéro de dépôt: 10805814.0
(22) Date de dépôt: 15.12.2010
(51) Int. Cl.: B60R 7/08, B60R 7/04

(54) **DISPOSITIF DE RANGEMENT INTERIEUR POUR VEHICULE AUTOMOBILE**
INNENSTAURAUM FÜR EIN KRAFTFAHRZEUG
INTERIOR STORAGE DEVICE FOR A MOTOR VEHICLE

(30) Priorité: 15.12.2009 FR 0958992
(43) Date de publication de la demande: 24.10.2012
(73) Titulaire: Renault S.A.S., 92100 Boulogne-Billancourt (FR)
(72) Inventeur: AUBINEAU, Ivan, F-28410 Goussainville (FR); BARROIS, Denis, F-78260 Achères (FR); EVEN, Gérard, F-95610 Eragny (FR)
(86) Numéro de dépôt international: PCT/FR2010/052748
(87) Numéro de publication internationale: WO 2011/080458

(56) Documents cités:
- JP-A- 9 142 220
- JP-A- 10 217 860
- JP-A- 2001 001 837
- JP-A- 2002 036 962
- JP-A- 2002 293 191
- JP-A- 2008 087 699

## Description

La présente invention concerne un dispositif de rangement intérieur pour véhicule automobile.

L'invention concerne plus précisément un dispositif de rangement amovible destiné à recevoir des tickets du type tickets de péage, ou des cartes du type cartes de paiement.

Certains véhicules automobiles comportent différents types de rangements spécifiques, adaptés aux besoins du conducteur et des passagers, comme par exemple des rangements pour téléphones portables, pour pièces de monnaie, ou bien des vide-poches de toutes tailles.

Le document FR2907075 propose ainsi un rangement spécifique pour carte de paiement ou ticket de péage. Ce rangement est formé d'un élément formant un boitier comportant une ou plusieurs fentes sur sa face avant. Ce boitier est destiné à être inséré dans un logement de réception prévu dans la planche de bord. Une fois positionné dans le logement, la face avant du boitier se situe sensiblement dans le prolongement de la planche de bord et masque complètement le logement. Des pattes de blocage du boitier permettent de fixer le boitier dans le logement. Ainsi le boitier spécifique aux cartes de paiement ou tickets de péage est inamovible sans outil. Egalement dans JP 1021786 A on propose un rangement spécifique pour carte de paiement.

Le document DE102005041560 propose également un rangement spécifique, mais pour pièces de monnaie. Ce rangement est aussi formé d'un élément formant un boitier comportant une ou plusieurs fentes sur sa face avant, et destiné à être inséré dans un logement de la console centrale du véhicule. Comme dans le document FR2907075, ce boitier spécifique pour pièces de monnaie comporte des pattes de blocage qui permettent de fixer ledit boitier dans une position inamovible sans outil.

La présente invention a donc pour objet de fournir un dispositif de rangement amélioré afin de palier à ces inconvénients en proposant un dispositif de rangement facilement amovible et permettant de ranger au moins un ticket de péage ou une carte de paiement tout en présentant au moins un autre type de rangement.

A cet effet l'invention propose un dispositif de rangement intérieur pour comprenant un corps principal maintenu dans un logement défini dans un élément d'habillage du véhicule comme par exemple la planche de bord, le plan inférieur du corps principal et le fond du logement sont distants de manière à former une cavité apte à recevoir une carte de paiement ou un ticket de péage.

Cette invention permet avantageusement, outre d'obtenir une réalisation simple en positionnant un élément principal dans un logement du type vide-poche, de réaliser une cavité pour le logement d'une carte de paiement ou d'un ticket de péage à l'interface de l'élément principal et du logement de l'élément d'habillage, permettant ainsi d'ajouter d'autres fonctionnalités au corps principal, ou de libérer de l'espace pour la création d'un rangement secondaire.

Selon d'autres caractéristiques de l'invention, les parois latérales du logement peuvent comprendre chacune une nervure s'étendant sensiblement parallèlement au fond du logement, et les faces latérales du corps principale peuvent comprendre chacune une rainure coopérant avec les nervures du logement de manière à former une glissière pour positionner facilement le corps principal dans le logement.

La face arrière du logement peut comprendre au moins une ouverture et le corps principal peut comprendre au moins une patte de blocage s'insérant dans ladite ouverture.

Le corps principal peut être encastré et maintenu par frottement dans le logement.

Le fond du logement peut comprendre une première portion de largeur supérieure ou égal à la largeur standard d'une carte de paiement et de longueur inférieure ou égale à la longueur standard d'une carte de paiement.

Le fond du logement peut comprendre une seconde portion de largeur inférieure à ladite largeur standard, ladite seconde portion étant située en arrière de la première portion.

Les parois latérales du logement peuvent former chacune un épaulement de manière à former des butées délimitant la première portion et la seconde portion du fond du logement.

Le corps principal peut comporter une face avant présentant des moyens de rangement pouvant être adaptés pour recevoir des pièces de monnaies et/ou adaptés pour recevoir une carte de paiement au format standard.

Le corps principal peut comporter une partie arrière coopérant avec la paroi arrière et les parois latérales du logement pour former un réceptacle.

L'invention concerne également un corps principal adapté à un tel dispositif de rangement et un véhicule automobile comportant un tel dispositif de rangement.

D'autres caractéristiques et avantages de l'invention apparaîtront à la lecture de la description d'un exemple qui va maintenant en être fait en se référant aux dessins annexés, sur lesquels :
La figures 1 est une vue partielle d'une planche de bord comprenant le dispositif de rangement de l'invention ;
La figure 2 est une vue en coupe longitudinale du dispositif de rangement de la figure 1 ;
Les figures 3 et 4 sont des vues du logement du dispositif de rangement de la figure 1 ;
La figure 5 est une vue du corps principal du dispositif de rangement de la figure 1.

Dans la description suivante les termes avant et arrière seront utilisés par rapport à la face de la planche de bord et des utilisateurs. Le terme avant qualifie une partie du dispositif plus proche de l'utilisateur à l'inverse du terme arrière qui qualifie une partie du dispositif plus éloignée de l'utilisateur.

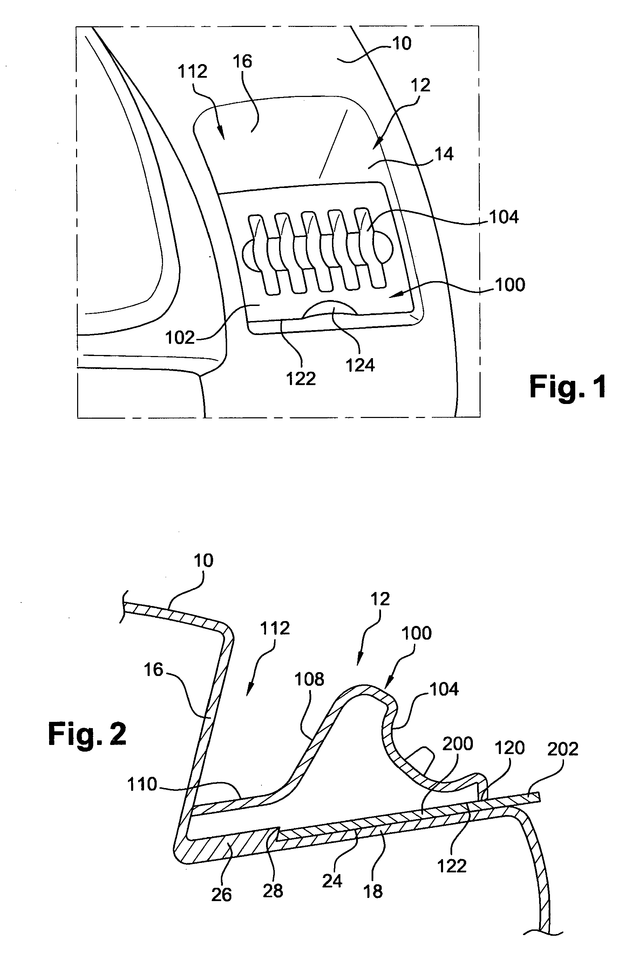

En référence aux figures 1 à 4, un véhicule automobile comprend une façade de planche de bord 10 dans laquelle un logement 12 du type vide-poche est formé. Ce logement 12 est défini par deux parois latérales 14 sensiblement verticales, une paroi arrière 16 sensiblement verticale et reliant les parois latérales 14, et un fond 18 reliant les parois latérales 14 et la paroi arrière 16. Les parois latérales 14, la paroi arrière 16 et la paroi formant le fond du logement 18 ont toute une arête commune avec la façade de la planche de bord 10 de manière à former l'ouverture du logement 12.

Ce logement 12 en tant que tel peut servir de vide-poche permettant à l'utilisateur de déposer toute sorte d'objet comme des clés par exemple.

Selon l'invention, en référence à la figure 1, le logement 12 peut coopérer avec un corps principal 100. Ce corps principal 100 se positionne dans le logement 12 et permet d'ajouter des fonctionnalités à cet espace de rangement.

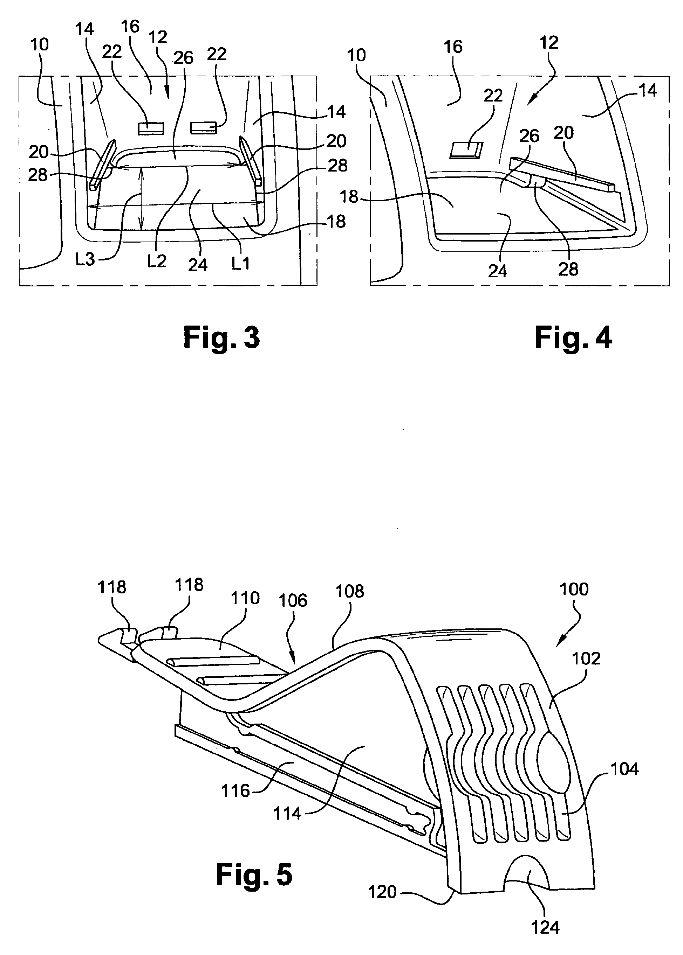

Ainsi, en référence aux figures 1, 2 et à la figure 5, cette dernière représentant le corps principal 100 seul, ledit corps principal 100 comporte une face avant 102 présentant une série de fentes 104 destinées à recevoir des pièces de monnaie. Cette face avant pourrait également présenter d'autres formes pour s'adapter au rangement spécifique de certains objets comme, par exemple, une fente pour recevoir une carte de paiement ou un ticket de péage.

Le corps principale 100 comporte également une partie arrière 106 formée de deux plans 108 et 110 successifs qui, en coopérant avec la paroi arrière 16 et les parois latérales 14 du logement lorsque le corps principal 100 est positionné dans ledit logement 12, forment un réceptacle 112. Ce réceptacle 112 permet le rangement d'objets tels que des clés, téléphones portables ou tout autre objet de petite taille.

En référence aux figures 3 à 5, dans le mode de réalisation de l'invention décrit à titre d'exemple, les parois latérales 14 du logement 12 comprennent chacune une nervure 20 s'étendant sensiblement parallèlement au fond du logement 18.

De plus les faces latérales 114 du corps principale 100 comprennent chacune une rainure 116 coopérant avec les nervures 20 du logement 12 de manière à former une glissière permettant positionner par coulissement le corps principal dans le logement 12.

Afin de fixer le corps principal 100 dans le logement 12, la partie arrière 106 du corps principal 100 se prolonge par deux pattes de blocage 118 en forme de crochet s'insérant dans deux ouvertures 22 situées sur la paroi arrière 16 du logement 12.

Pour pouvoir démonter facilement et sans outil spécifique le bloc principal 100 du logement 12, l'extrémité de la partie arrière 106 précédent les pattes de blocage 118 est légèrement flexible de sorte qu'une pression sur cette extrémité puisse libérer les pattes de blocage 118 des ouvertures 22, et permettre l'extraction du corps principal 100 du logement 12.

Dans un autre mode de réalisation de l'invention non représenté, le corps principal est encastré et maintenu par frottement dans le logement. Pour ce faire au moins une des dimensions du corps principal doit être sensiblement égale à celles du logement. Par exemple la largeur du corps principal peut être sensiblement égale à la distance entre les parois latérales du logement. De plus, pour faciliter l'insertion du corps principal dans le logement, la distance entre les parois latérales peut diminuer en allant vers le fond du logement. Ce mode de réalisation présente l'avantage de pouvoir positionner et enlever le corps principal aisément car il ne nécessite pas de moyens de fixations tels que des pattes de blocages.

Dans tous les modes de réalisation, en référence à la figure 2, le plan inférieur 120 du corps principal 100 positionné dans le logement 12 est distant du fond du logement 18 de manière à former une cavité 122 apte à recevoir une carte de paiement 200 de format standard 8,5 cm x 5,4 cm environ, ou un ticket de péage. Pour cela la distance entre le plan inférieur 120 du corps principal 100 et le fond du logement 18 est préférablement comprise entre 1 et 5 mm, et dans cet exemple cette distance est égale à 3 mm.

Afin que la carte de paiement 200 ne quitte pas la cavité 122 sous l'effet de la pesanteur ou d'accélérations et décélérations du véhicule, le fond 18 du logement 12 est incliné de sorte que l'arête entre le fond du logement 18 et la façade de la planche de bord 10 soit plus haute que l'arête entre le fond du logement 18 et la paroi arrière 16. Ainsi la carte de paiement 200 sous l'effet de la pesanteur a tendance à se déplacer vers l'arrière de la cavité au lieu de ressortir de cette dernière.

Le dispositif de rangement peut comprendre d'autres moyens de maintien, non représentés, de la carte de paiement 200 ou ticket de péage dans la cavité. Le corps principal peut ainsi comporter une languette flexible apte à plaquer la carte de paiement contre le fond du logement.

Pour que ladite carte de paiement 200 ou ledit ticket de péage reste préhensible par l'utilisateur, le fond du logement comprend une première portion 24 s'étendant vers l'arrière du logement 12 depuis l'arête entre le fond du logement 18 et la façade de la planche de bord 10, et de largeur L1 supérieure ou égal à la largeur standard d'une carte de paiement mais inférieure à la longueur standard de ladite carte, et une seconde portion 26 s'étendant de la première portion 24 vers l'arrière du logement 12, et de largeur L2 inférieure à ladite largeur standard. De plus la longueur L3 de la première portion 24 est inférieure à la longueur standard d'une carte de paiement. Ainsi lors de l'insertion d'une carte de paiement 200 dans la cavité 122, ladite carte se positionne dans la première portion 24 car la seconde portion 26 est trop étroite pour l'insertion d'une carte au format standard, et une extrémité 202 de la carte reste accessible par l'utilisateur.

Dans le mode de réalisation représenté notamment aux figures 2 à 4, les parois latérales 14 du logement 12 forment chacune un épaulement 28 de manière à former des butées délimitant la première 24 et la seconde portion 26 du fond du logement 18.

D'autres moyens de délimitation non représentés peuvent aussi être envisagés comme par exemple des butées situées sur le fond du logement ou des butées liées au plan inférieur du corps principal. De plus il est également possible que le logement 12 ne présente qu'une unique première portion 24 adapté au format standard d'une carte de paiement.

De plus, afin de permettre une meilleure préhension de la carte de paiement 200, la partie inférieure de la face avant 102 du corps principale 100 comporte un évidement 124 en direction du fond 18 du logement 12 permettant à un doigt de l'utilisateur d'avoir une plus grande surface contact avec la carte de paiement pour la retirer de la cavité 122.

Cette invention permet avantageusement de réaliser une cavité pour le logement d'une carte de paiement à l'interface de l'élément principal et du logement, permettant ainsi d'utiliser la face avant du corps principal pour une fonctionnalité secondaire comme le maintien de pièces de monnaie, et de libérer de l'espace à l'arrière de dispositif pour la création d'un rangement secondaire par exemple pour disposer un téléphone portable ou des clés.

De plus, la réalisation relativement simple de ce dispositif permet à l'utilisateur de pouvoir le démonter facilement sans outil.

## Revendications

1. Dispositif de rangement intérieur pour véhicule automobile, le dispositif comprenant un corps principal (100) maintenu dans un logement (12) défini dans un élément d'habillage (10) du véhicule, **caractérisé en ce que** le corps principal est délimité par au moins un plan inférieur (120) et une face avant (102) apte à comporter des moyens de rangement (104) et **en ce que** le plan inférieur (120) du corps principal et le fond (18) du logement sont distants de manière à former une cavité (122) apte à recevoir une carte de paiement (200) ou un ticket de péage.

2. Dispositif de rangement selon la revendication 1, **caractérisé en ce que** les parois latérales (14) du logement (12) comprennent chacune une nervure (20) s'étendant sensiblement parallèlement au fond (18) du logement, et **en ce que** les faces latérales (114) du corps principale (100) comprennent chacune une rainure (116) coopérant avec les nervures du logement de manière à former une glissière pour positionner le corps principal dans le logement.

3. Dispositif de rangement selon une des revendications précédentes, **caractérisé en ce que** la face arrière (16) du logement (12) comprend au moins une ouverture (22) et **en ce que** le corps principal (100) comprend au moins une patte de blocage (118) s'insérant dans ladite ouverture.

4. Dispositif de rangement selon la revendication 1, **caractérisé en ce que** le corps principal (100) est encastré et maintenu par frottement dans le logement (12).

5. Dispositif de rangement selon une des revendications précédentes, **caractérisé en ce que** le fond (18) du logement (12) comprend une première portion (24) de largeur (L1) supérieure ou égal à la largeur standard d'une carte de paiement et de longueur (L3) inférieure ou égale à la longueur standard d'une carte de paiement.

6. Dispositif de rangement selon la revendication 5, **caractérisé en ce que** le fond (18) du logement (12) comprend une seconde portion (26) de largeur (L2) inférieur à ladite largeur standard, ladite seconde portion étant située en arrière de la première portion (24).

7. Dispositif de rangement selon la revendication précédente, **caractérisé en ce que** les parois latérales (14) du logement (12) forment chacune un épaulement (28) de manière à former des butées délimitant la première portion (24) et la seconde portion (26) du fond (18) du logement.

8. Dispositif de rangement selon la revendication 1, **caractérisé en ce que** les moyens de rangement (104) sont adaptés pour recevoir des pièces de monnaies et/ou adaptés pour recevoir une carte de paiement (200) au format standard.

9. Dispositif de rangement selon une des revendications précédentes, **caractérisé en ce que** le corps principal (100) comporte une partie arrière (106) coopérant avec la paroi arrière (16) et les parois latérales (14) du logement (12) pour former un réceptacle (112).

10. Corps principal (100) adapté à un dispositif de rangement selon une des revendications précédentes.

11. Véhicule automobile comportant un dispositif de rangement selon une des revendications 1 à 10.

## Patentansprüche

1. Innenunterbringungsvorrichtung für Kraftfahrzeuge, wobei die Vorrichtung einen Hauptkörper (100) umfasst, der in einer Aufnahme (12) gehalten ist, die in einem Verkleidungselement (10) des Fahrzeugs definiert ist, **dadurch gekennzeichnet, dass** der Hauptkörper durch mindestens eine untere Ebene (120) und eine vordere Fläche (102) begrenzt ist, die geeignet ist, Unterbringungsmittel (104) aufzuweisen, und dass die untere Ebene (120) des Hauptkörpers und der Boden (18) der Aufnahme so voneinander beabstandet sind, dass ein Hohlraum (122) gebildet wird, der geeignet ist, eine Zahlungskarte (200) oder einen Mautschein aufzunehmen.

2. Innenunterbringungsvorrichtung nach Anspruch 1, **dadurch gekennzeichnet, dass** die Seitenwände (14) der Aufnahme (12) jeweils eine Rippe (20) umfassen, die sich im Wesentlichen parallel zum Boden (18) der Aufnahme erstreckt, und dass die Seitenflächen (114) des Hauptkörpers (100) jeweils eine Rille (116) aufweisen, die mit den Rippen der Aufnahme zusammenwirkt, so dass eine Gleitbahn zur Positionierung des Hauptkörpers in der Aufnahme gebildet wird.

3. Innenunterbringungsvorrichtung nach einem der vorhergehenden Ansprüche, **dadurch gekennzeichnet, dass** die hintere Fläche (16) der Aufnahme (12) mindestens eine Öffnung (22) umfasst und dass der Hauptkörper (100) mindestens eine Arretierlasche (118) umfasst, die sich in die Öffnung einfügt.

4. Innenunterbringungsvorrichtung nach Anspruch 1, **dadurch gekennzeichnet, dass** der Hauptkörper (100) in der Aufnahme (12) eingesetzt und dort durch Reibung gehalten ist.

5. Innenunterbringungsvorrichtung nach einem der vorhergehenden Ansprüche, **dadurch gekennzeichnet, dass** der Boden (18) der Aufnahme (12) einen ersten Abschnitt (24) umfasst, dessen Breite (L1) größergleich der standardmäßigen Breite einer Zahlungskarte ist und dessen Länge (L3) kleiner-gleich der standardmäßigen Länge einer Zahlungskarte ist.

6. Innenunterbringungsvorrichtung nach Anspruch 5, **dadurch gekennzeichnet, dass** der Boden (18) der Aufnahme (12) einen zweiten Abschnitt (26) umfasst, dessen Breite (L2) kleiner als die standardmäßige Breite ist und der hinter dem ersten Abschnitt (24) angeordnet ist.

7. Innenunterbringungsvorrichtung nach dem vorhergehenden Anspruch, **dadurch gekennzeichnet, dass** die Seitenwände (14) der Aufnahme (12) jeweils eine Schulter (28) bilden, um Anschläge zu bilden, die den ersten Abschnitt (24) und den zweiten Abschnitt (26) des Bodens (18) der Aufnahme begrenzen.

8. Innenunterbringungsvorrichtung nach Anspruch 1, **dadurch gekennzeichnet, dass** die Unterbringungsmittel (104) geeignet sind, Geldstücke aufzunehmen und/oder geeignet sind, eine Zahlungskarte (200) in Standardformat aufzunehmen.

9. Innenunterbringungsvorrichtung nach einem der vorhergehenden Ansprüche, **dadurch gekennzeichnet, dass** der Hauptkörper (100) einen hinteren Teil (106) umfasst, der mit der hinteren Wand (16) und den Seitenwänden (14) der Aufnahme (12) zusammenwirkt, um ein Behältnis (112) zu bilden.

10. Hauptkörper (100), der an eine Unterbringungsvorrichtung nach einem der vorhergehenden Ansprüche angepasst ist.

11. Kraftfahrzeug, umfassend eine Innenunterbringungsvorrichtung nach einem der Ansprüche 1 bis 10.

## Claims

1. Interior storage device for a motor vehicle, the device comprising a main body (100) held in a housing (12) defined in a trim element (10) of the vehicle, **characterized in that** the main body is delimited by at least one lower plane (120) and a front face (102) able to comprise storage means (104), and **in that** the lower plane (120) of the main body and the bottom (18) of the housing are remote so as to form a cavity (122) able to receive a payment card (200) or a toll ticket.

2. Storage device according to Claim 1, **characterized in that** the lateral walls (14) of the housing (12) each comprise a rib (20) extending substantially parallel to the bottom (18) of the housing, and **in that** the lateral faces (114) of the main body (100) each comprise a groove (116) cooperating with the ribs of the housing so as to form a slideway for positioning the main body in the housing.

3. Storage device according to either of the preceding claims, **characterized in that** the rear face (16) of the housing (12) comprises at least one opening (22), and **in that** the main body (100) comprises at least one locking tab (118) which is inserted into the said opening.

4. Storage device according to Claim 1, **characterized in that** the main body (100) is flush-mounted and held by friction in the housing (12).

5. Storage device according to one of the preceding claims, **characterized in that** the bottom (18) of the housing (12) comprises a first portion (24) with a width (L1) greater than or equal to the standard width of a payment card and with a length (L3) less than or equal to the standard length of a payment card.

6. Storage device according to Claim 5, **characterized in that** the bottom (18) of the housing (12) comprises a second portion (26) with a width (L2) less than the said standard width, the said second portion being situated to the rear of the first portion (24).

7. Storage device according to the preceding claim, **characterized in that** the lateral walls (14) of the housing (12) each form a shoulder (28) so as to form stops delimiting the first portion (24) and the second portion (26) of the bottom (18) of the housing.

8. Storage device according to Claim 1, **characterized in that** the storage means (104) are adapted to receive coins and/or adapted to receive a payment card (200) with the standard format.

9. Storage device according to one of the preceding claims, **characterized in that** the main body (100) comprises a rear part (106) cooperating with the rear wall (16) and the lateral walls (14) of the housing (12) to form a receptacle (112).

10. Main body (100) adapted to a storage device according to one of the preceding claims.

11. Motor vehicle comprising a storage device according to one of Claims 1 to 10.
